# EUROPEAN PATENT SPECIFICATION

(11) **EP 2 762 938 B1**
(45) Date of publication and mention of the grant of the patent: **15.07.2020**
(21) Application number: 13153719.3
(22) Date of filing: 01.02.2013
(51) Int. Cl.: G02B 6/44, H02G 15/117

(54) **Cable assembly having electrical power conductors and fiber optic data lines and a shielded furcation or joining location**
Kabelanordnung mit elektrischen Leitern und faseroptische Datenleitungen und einer abgeschirmten Aufteilstelle
Ensemble de câbles possédant des conducteurs de puissance électrique et lignes de données par fibre optique et une dérivation avec protection

(43) Date of publication of application: 06.08.2014
(73) Proprietor: Corning Optical Communications LLC, Charlotte, NC 28216 (US)
(72) Inventor: WIMMER, Michael, 16766 Kremmen (DE)
(74) Representative: Sturm, Christoph

(56) References cited:
- EP-A1- 2 360 503
- EP-A1- 2 845 044
- WO-A1-2012/038104
- DE-A1- 19 620 432
- US-A- 4 805 979
- US-A- 5 121 458
- US-A- 5 237 635
- US-A- 5 271 080
- US-A1- 2007 047 897

## Description

The present disclosure generally relates to a cable assembly having electrical power conductors and fiber optic data lines. Further on, the present disclosure generally relates to a power and communication system including such a cable assembly.

The present disclosure relates especially to FTTA (Fiber-To-The-Antenna) applications. Within an FTTA application, a power and communication system may include an antenna, where the antenna has a base station and a transmitter station. A cable assembly extends from the base station of the antenna to the transmitter station of the antenna, where the cable assembly includes electrical power conductors for providing electrical power from the base station to the or each transmitter station and includes fiber optic data lines for transmitting data signals between the base station to the transmitter station.

WO 2012/038104 A1 discloses a cable assembly having electrical power conductors and fiber optic data lines. This prior art cable assembly includes a hybrid cable having first electrical power conductors and first fiber optic data lines. This prior art cable assembly further comprises a plurality of electrical tether cables having second electrical power conductors and a fiber optic tether cable having second fiber optic data lines. In addition, this prior art cable assembly includes a joining location. The first electrical power conductors of the hybrid cable are connected with the second electrical power conductors of the electrical tether cable at the joining location. Further, first fiber optic data lines of the hybrid cable are connected with the second fiber optic data lines of the fiber optic tether cable at the joining location. According to WO 2012/038104 A1, the joining location is provided by a breakout enclosure in form of a box or a can.

In an FTTA application, the transmitter station of the antenna may be located on high structures, such as on top of a building or a tower. Due to this location, a risk of damage by a lightning strike is considerable. The cable assembly known from WO 2012/038104 A1 appears to be insufficiently protected against damage by a lightning strike.

EP 2 360 503 A1 discloses a cable assembly with electrical power conductors and fiber optic data lines, the cable assembly comprising:a hybrid cable having first electrical power conductors and at least one first fiber optic data line, wherein the first electrical power conductors and the or each first fiber optic data line are surrounded by a shielding element of the hybrid cable; a plurality of electrical tether cables having second electrical power conductors and at least one fiber optic tether cable (having at least one second fiber optic data line, wherein the second electrical power conductors of each electrical tether cable are surrounded by a shield-ing element of the respective electrical tether cable; a furcation or joining location, wherein the first electrical power conductors of the hybrid cable are branched off to or connected with the second electrical power conductors of the electrical tether cables at the furcation or joining location, and wherein the or each first fiber optic data line of the hybrid cable is branched off to or connected with the second fiber optic data line of the or each fiber optic tether cable at the furcation or joining location; wherein an electrical contact is established between the shielding element of the hybrid cable and the shielding elements of the respective electrical tether cables.

DE 196 20 432 A1 and EP 2 845 044 A1 disclose other cable assembly according to the prior art.

The present patent application is based on the problem of providing a novel cable assembly and a novel power and communication system being sufficiently protected against damage by a lightning strike.

The furcation or joining location of the cable assembly comprises a shielding unit establishing an electrical contact between the shielding element of the hybrid cable and the shielding elements of the respective electrical tether cables, wherein the shielding unit comprises a central body made from an electrical conductive material surrounding the hybrid cable and tether cables in the region of the furcation or joining location, and wherein the central body is in electrical contact with the shielding element of the hybrid cable and with the shielding element of each electrical tether cable. Such a cable assembly is sufficiently protected against damage by a lightning strike. The shielding unit provides in longitudinal direction of the cable assembly a 360° shielding of all electrical power conductors and avoids an electrical overload on the power conductors due to lightning effects. The shielding unit protects the electrical power conductors against an electromagnetic impulse and transmits a lightning current to ground.

The shielding unit further comprises a first compression element made from an electrical conductive material being positioned between first nut-like body and the hybrid cable, wherein the first compression element becomes compressed when the first nut-like body becomes fastened to the central body such that the compressed first compression element provides an electrical conductive path between the shielding element of the hybrid cable and the central body. This improves the electrical connection of the shielding unit with the shielding element of the hybrid cable and improves protection against damage by a lightning strike. The shielding unit further comprises a second compression element made from an electrical conductive material being positioned between second nut-like body and the tether cables, wherein the second compression element becomes compressed when the second nut-like body becomes fastened to the central body such that the compressed second compression element provides an electrical conductive path between the shielding elements of the electrical tether cables and the central body. This improves the electrical connection of the shielding unit with the shielding element of each electrical tether cable and further improves protection against damage by a lightning strike. The shielding unit further comprises a separator element made from an electrical conductive material, wherein the separator element comprises recesses for receiving the electrical tether cables, and wherein the electrical tether cables become pressed into the recesses of the separator element when the second compression element becomes compressed, thereby providing an electrical conductive path on the one hand between the shielding elements of the electrical tether cables and the central body, and on the other hand between the shielding elements of the electrical tether cables and the separator element. The separator element ensures that the shielding elements of the power tether cables are kept in the right position, thereby further improving the electrical connection of the shielding unit with the shielding elements of the electrical tether cables and thereby further improving the protection against damage by a lightning strike.

The shielding unit further comprises a first nut-like body made from an electrical conductive material being fastenable to a first end of the central body in the region of the hybrid cable providing an electrical contact with the shielding element of the hybrid cable, and a second nut-like body made from an electrical conductive material being fastenable to a second end of the central body in the region of the tether cable providing an electrical contact with the shielding element of each electrical tether cable. This modular design of the shielding unit allows the adaption of the shielding unit and thereby of the cable assembly to different cable diameters of the hybrid cable and/or to different numbers of tether cables.

Preferably, the separator element of the shielding unit comprises an opening for receiving and contacting a grounding wire. This further improves protection against damage by a lightning strike.

Preferably, the shielding unit is filled with an insulation material. The insulation material further improves protection against damage by a lightning strike and provides strain relief for the hybrid cable and tether cables.

Preferably, the shielding unit is over-molded. The over-mold seals the hole joining point against environmental influences like water and dust.

Embodiments of the fiber optic distribution device are given in the description below. Exemplary embodiments will be explained in more detail with reference to the drawings, in which:
- Figure 1: shows different views of a cable assembly with electrical power conductors and fiber optic data lines according to a first embodiment;
- Figure 2: shows a first cross-section through the cable assembly according to Figure 1;
- Figure 3: shows a second cross-section through the cable assembly according to Figure 1;
- Figure 4: shows an exploded view of a modular shielding unit of the cable assembly according to Figure 1;
- Figure 5: shows an exploded view of an alternative modular shielding unit;
- Figure 6: shows an alternative detail for Figures 4 and 5;
- Figure 7: shows a separator element of the modular shielding unit of the cable assembly according to Figure 1;
- Figure 8: shows different views of a cable assembly with electrical power conductors and fiber optic data lines according to a second embodiment;
- Figure 9: shows a cross-section through the cable assembly according to Figure 8;
- Figure 10: shows another cross-section through the cable assembly according to Figure 8;
- Figure 11: shows a separator element of the modular shielding unit of the cable assembly according to Figure 8;
- Figure 12: shows additional views of the cable assembly according to Figure 8;
- Figure 13: shows a cross-section through a cable assembly with electrical power conductors and fiber optic data lines according to a third embodiment;
- Figure 14: shows an exploded view of some elements of a modular shielding unit of the cable assembly according to Figure 13; and
- Figure 15: shows a schematic diagram of a power and communication system according an exemplary embodiment.

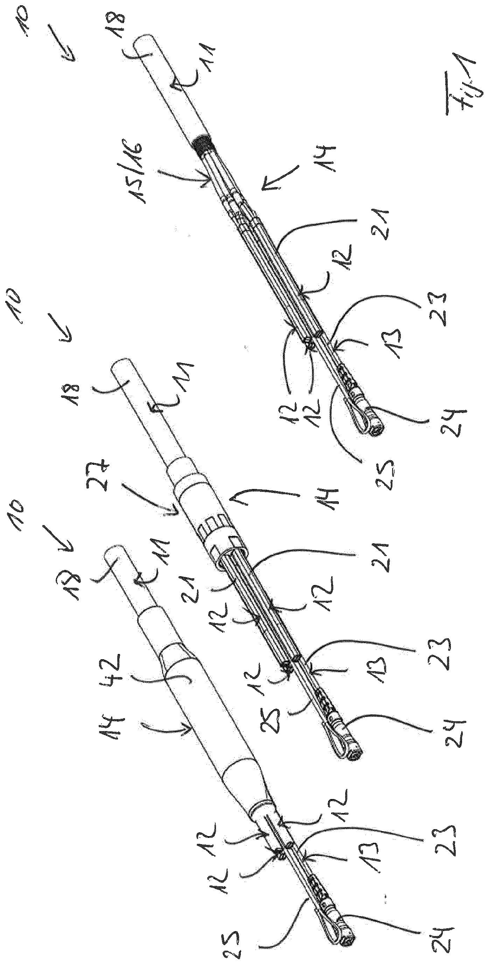

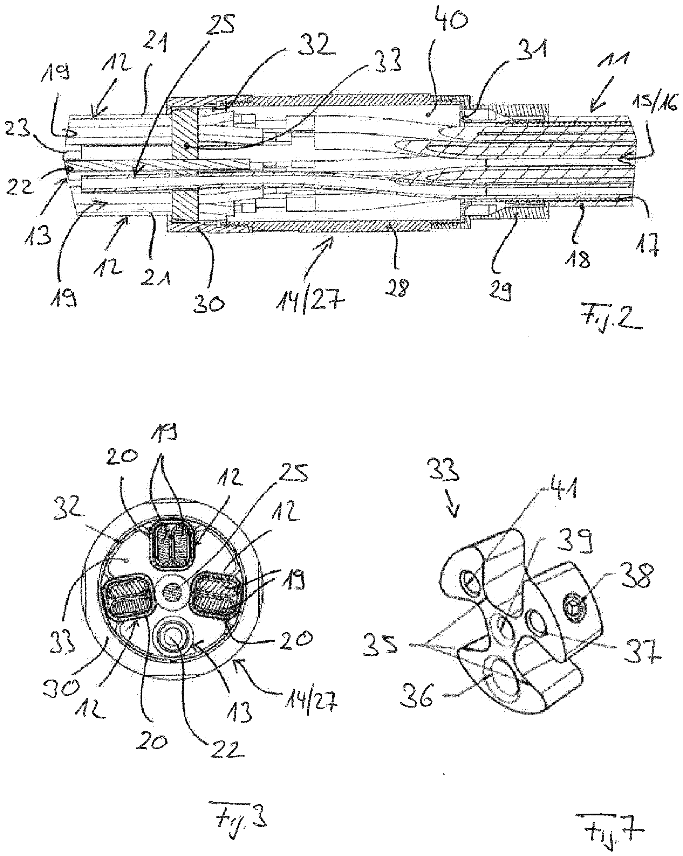

Figures 1 to 7 show different views and details of a cable assembly 10 with electrical power conductors and fiber optic data lines according to a first embodiment of the pre-sent patent application.

A cable assembly 10 according an exemplary embodiment comprises a hybrid cable 11, a plurality of electrical tether cables 12, at least one fiber optic tether cable 13 and a joining location 14 at which the electrical tether cables 12 and at least one fiber optic tether cable 13 are connected to the hybrid cable 11.

In the embodiment of Figures 1 to 7, the cable assembly 10 comprises one hybrid cable 11, three electrical tether cables 12 and one fiber optic tether cable 13.

The hybrid cable 11 has first electrical power conductors 15 and at least one first fiber optic data line 16, wherein the first electrical power conductors 15 and the or each first fiber optic data line 16 of the hybrid cable 11 are commonly surrounded by a shielding element 17 and by an outer cable jacket 18 of the hybrid cable 11.

Each of the electrical tether cable 12 has second electrical power conductors 19 being surrounded by a shielding element 20 of the respective electrical tether cable 12 and by an outer cable jacket 21 of the respective electrical tether cable 12. The fiber optic tether cable 13 has at least one second fiber optic data line 22 being surrounded by a an outer cable jacket 23 of the optical tether cable 13.

In the embodiment of Figures 1 to 7, the hybrid cable 11 has six first electrical power conductors 15 and one first fiber optic data line 16. In the embodiment of Figures 1 to 7, each of the electrical tether cable 12 has two second electrical power conductors 19 and the one fiber optic tether cable 13 has one second fiber optic data line 22.

The first electrical power conductors 15 of the hybrid cable 11 are connected with the second electrical power conductors 19 of the electrical tether cables 12 at adjacent ends of the hybrid cable 11 and electrical tether cables 12, namely at the joining location 14. Further on, the first fiber optic data line 16 of the hybrid cable 11 is connected with the second fiber optic data line 22 of the fiber optic tether cable 13 at adjacent ends of the hybrid cable 11 and fiber optic tether cable 13, namely at the joining location 14.

According to Figure 1, the fiber optic tether cable 13 is connectorized with a fiber optic connector 24 at an end of the fiber optic tether cable 13 being opposite to the end at the joining location 14.

In the embodiment of Figures 1 to 7, the cable assembly 10 further comprises a pulling element 25 with a pulling grip 26, which can be used to install the cable assembly 10 within a cable duct. The pulling grip 26 is positioned at the end of the cable assembly 10 at which the fiber optic tether cable 13 comprises the fiber optic connector 24.

The joining location 14 comprises a modular shielding unit 27 establishing an electrical contact between the shielding element 17 of the hybrid cable 11 and the shielding elements 20 of the respective electrical tether cables 12. The modular shielding unit 27 comprising at least a central body 28 and in addition preferably a first nut-like body 29 and a second nut-like body 30, all made from an electrical conductive material.

The central body 28 surrounds in longitudinal direction of the cable assembly 10 the hybrid cable 11 and tether cables 12 and 13 at the joining location 14.

The central body 28 surrounds at least the connections between the electrical power conductors 15 of the hybrid cable 11 and the electrical power conductors 19 of the electrical tether cables 12. The central body 28 is in electrical contact with the shielding element 17 of the hybrid cable 11 and with the shielding element 20 of each electrical tether cable 12.

The central body 28 may further surround the connection between the first fiber optic data line 16 of the hybrid cable 11 and the second fiber optic data line 22 of the fiber optic tether cable 13. However, the connection between the first fiber optic data line 16 of the hybrid cable 11 and the second fiber optic data line 22 of the fiber optic tether cable 13 is preferably positioned offset from outside of the central body 28.

The first nut-like body 29 is fastenable, preferably screwable or alternatively rivetable or weldable, to a first end of the central body 28 in the region of the hybrid cable 11 providing an electrical contact with the shielding element 17 of the hybrid cable 11. The second nut-like body 30 is fastenable, preferably screwable or alternatively rivetable or weldable, to a second end of the central body 28 in the region of the tether cables 12, 13 providing an electrical contact with the shielding element 20 of each electrical tether cable 12.

This provides a secure electrical contact between the shielding element 17 of the hybrid cable 11 and the shielding elements 20 of the electrical tether cables 12. All electrical power conductors 15, 19 of the hybrid cable 11 and the power tether cables 12 are covered and 360° shielded by the modular shielding unit 27.

Preferably, the modular shielding unit 27 further comprises a first compression element 31 being positioned between first nut-like body 29 and the hybrid cable 11, a second compression element 32 being positioned between second nut-like body 30 and the tether cables 12, 13, and a separator element 33 being positioned in the region of the second nut-like body 30 for separating the tether cables 12, 13. The first compression element 31, the second compression element 32 and the separator element 33 are all made from an electrical conductive material.

The first compression element 31 becomes automatically compressed when the first nut-like body 29 becomes fastened to the central body 28 such that the compressed first compression element 31 provides an electrical conductive path between the shielding element 17 of the hybrid cable 11 and the central body 28. In some embodiments, the first compression element 31 comprises slots 46 running in longitudinal direction of the same allowing a radial compression of the first compression element 31 while the first nut-like body 29 becomes fastened to the central body 28.

The second compression element 32 becomes automatically compressed when the second nut-like body 30 becomes fastened to the central body 28 such that the compressed second compression element 32 provides an electrical conductive path between the shielding elements 21 of all electrical tether cables 12 and the central body 28. The second compression element 32 may comprise slots 47 running in longitudinal direction of the same allowing a radial compression of the second compression element 32 while the second nut-like body 30 becomes fastened to the central body 28.

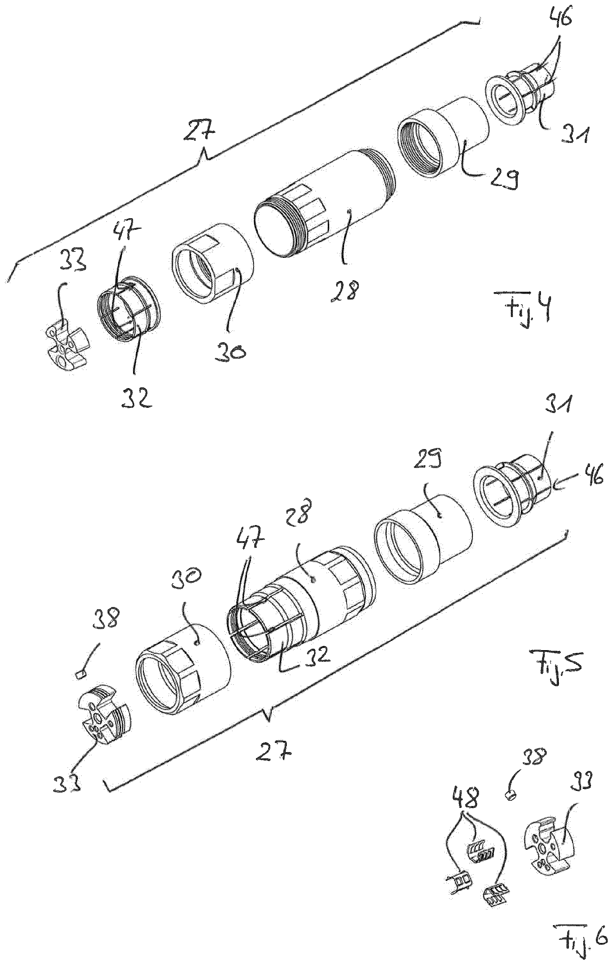

According to an exemplary embodiment, the first compression element 31 is a separate element of the modular shielding unit 27. The second compression element 32 is preferably an integral element of the central body 28 (see Figure 5). However, it is also possible that the second compression element 32 is a separate element of the modular shielding unit 27 (see Figure 4).

The central body 28, the first nut-like body 29, and the second nut-like body 30 as well as the first compression element 31 and the second compression element 32 have, in the longitudinal direction of the cable assembly, an almost cylindrical outer shape. The compression elements 31, 32 can be pushed into the nut-like bodies 29, 30 and the nut-like bodies can be screwed on the central body or otherwise fastened thereto. This ensures an easy and reliable assembly. The central body 28, the nut-like bodies 29, 30 and the compression elements 31, 32 may all be manufactured by lathing.

It is preferred to screw the nut-like bodies 29, 30 on the central body 28. However it is also possible to fasten the same together in a different way, e.g. by ratcheting flanges on the central body with deflective features, such as a pawl, on the nut-like bodies 29, 30.

The separator element 33 may be positioned in the region of the second compression element 32. The separator element 33 has a disk-like basic body 34 providing outer recesses 35 for receiving the electrical tether cables 12. The outer recesses 35 for receiving the electrical tether cables 12 are provided at the outer circumference of the disk-like basic body 34. In the embodiment of Figures 1 to 7, the disk-like basic body 34 of the separator element 33 provides three outer recesses 35 each for receiving one of the three electrical tether cables 12.

According to an exemplary embodiment, the electrical tether cables 12 become inserted into the recesses 35 in radial direction of the disk-like basic body 34. The electrical tether cables 12 become pressed into the recesses 35 of the separator element 33 when the second compression element 32 becomes compressed, thereby providing on the one hand an electrical conductive path between the shielding element 20 of each electrical tether cable 12 and the central body 28, and on the other hand between the shielding element 20 of each electrical tether cable 12 and the separator element 33. The separator element 33 keeps the shielding elements 20 of the power tether cables 12 in the right position, thereby further improving the electrical connection of the shielding unit 27 with the shielding elements 20 of the electrical tether cables 12.

The separator element 33 further comprises at least one through hole 36 or other aperture for receiving at least one fiber optic tether cable 13. In the embodiment of Figures 1 to 7, the disk-like basic body 34 of the separator element 33 provides one through hole 36 for receiving the one fiber optic tether cable 13.

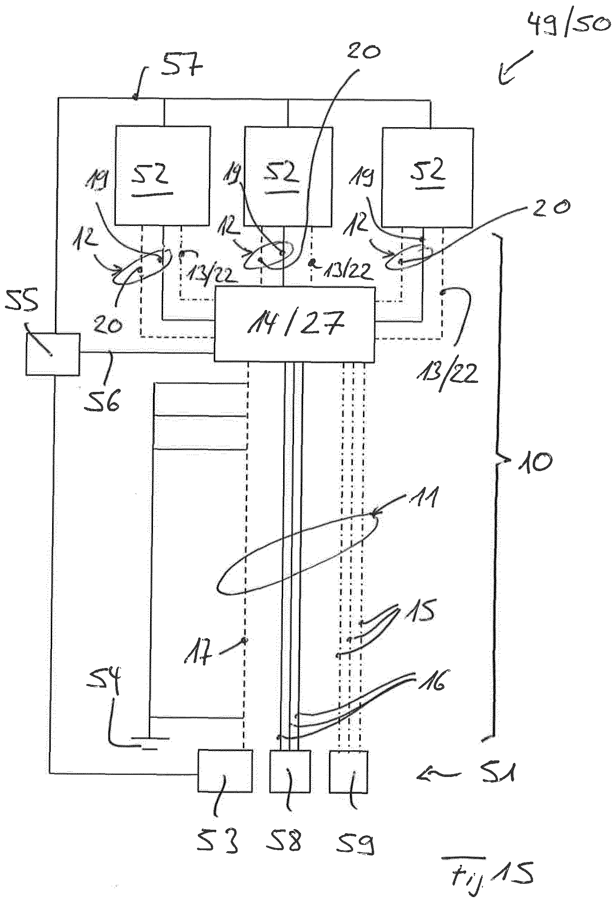

The separator element 33 further comprises an opening 37 for receiving and contacting a grounding wire 56 (see Figure 15). The grounding wire is made from an electrical conductive material and becomes inserted into the opening 37 and fixed within the opening by a set screw 38 or other fastener.

Thereby, an electrical conductive path is established between the grounding wire 56 and the shielding elements 17, 20 of the hybrid cable 11 and the electrical tether cables 12 through the modular shielding unit 27.

The separator element 33 further comprises a through hole 39 or other aperture for receiving the pulling element 25.

As shown in Figure 6, it is possible to have guiding elements 48 positioned with the recesses 35 of the separator element 33 before the electrical tether cables 12 become inserted into the recesses 35. Such guiding elements 48 may be made from an electrically conductive material and may further improve the electrical contact between the separator element 33 and the shielding elements 20 of the electrical tether cables 12.

The modular shielding unit 27 is preferably filled with an insulation material 40. The insulation material is preferably a duroplast material.

After connecting the electrical power conductors 15, 19 and the fiber optic data lines 16, 22 of the hybrid cable 11 and the tether cables 12, 13 and after assembling the modular shielding unit 27, free space of the same becomes filled with the insulation material 40. The separator element 33 comprises a through hole 41 or other aperture for injecting the insulation material 40 into the free space of the modular shielding unit 27. The insulation material 40 improves the shielding and provides strain relief. When the cable assembly 10 is pulled though a cable duct or the like, the weight of the hybrid cable 11 may causes a high mechanical load. In some embodiments, the pulling force needs to become transmitted through the shielding unit 27 of the joining point 14 to the hybrid cable 11. The optical and electrical connection is protected against this mechanical stress by the insulation material 40. It is possible to transmit the complete mechanical load through the shielding unit 27.

The joining location 14 is preferably over-molded by an over-mold 42. The over-mold 42 is preferably a duroplast material. The over-mold 42 seals the entire joining location 14 against environmental influences like water an dust.

The joining location 14 comprising the shielding unit 27 and the over-mold 42 is characterized by small dimensions allowing an easy transportation and installation of the cable assembly.

For example, in some embodiments the cable assembly is sized to fit through a cylindrical duct having a 15 cm diameter or narrower, such as a duct having a 12 cm diameter or narrower, and in some such embodiments even a duct having a 10 cm diameter or narrower. The narrow profile allows the cable assembly to maneuver through tight spaces, as may be present in a telecommunications antenna tower, allowing for ideal placement of the cable assembly and ease of installation. Further, the narrow profile may reduce drag loads on the cable assembly when perched in an antenna tower, such as in windy storms, allowing for less bulky constraints on and/or housing of the cable assembly. However, in other contemplated embodiments, the cable assembly may be too large to fit through such ducts.

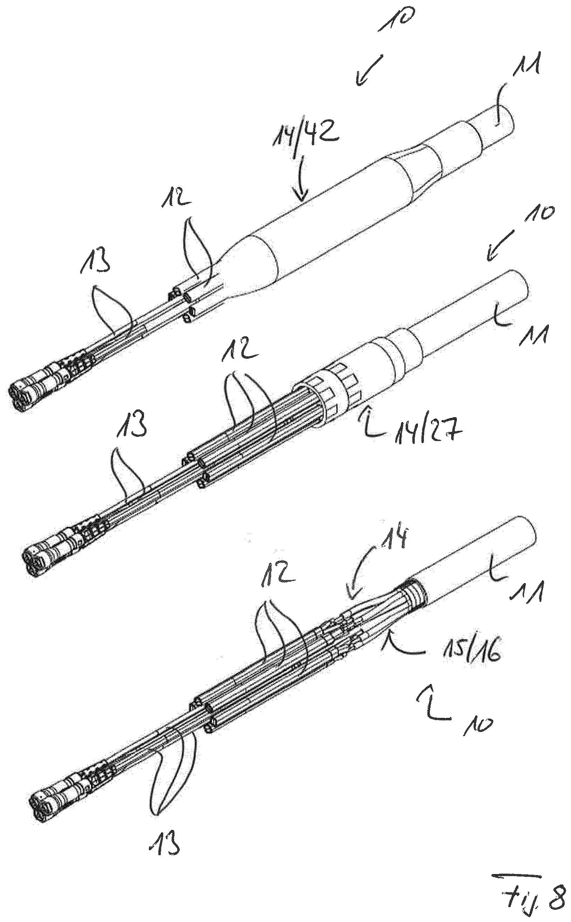

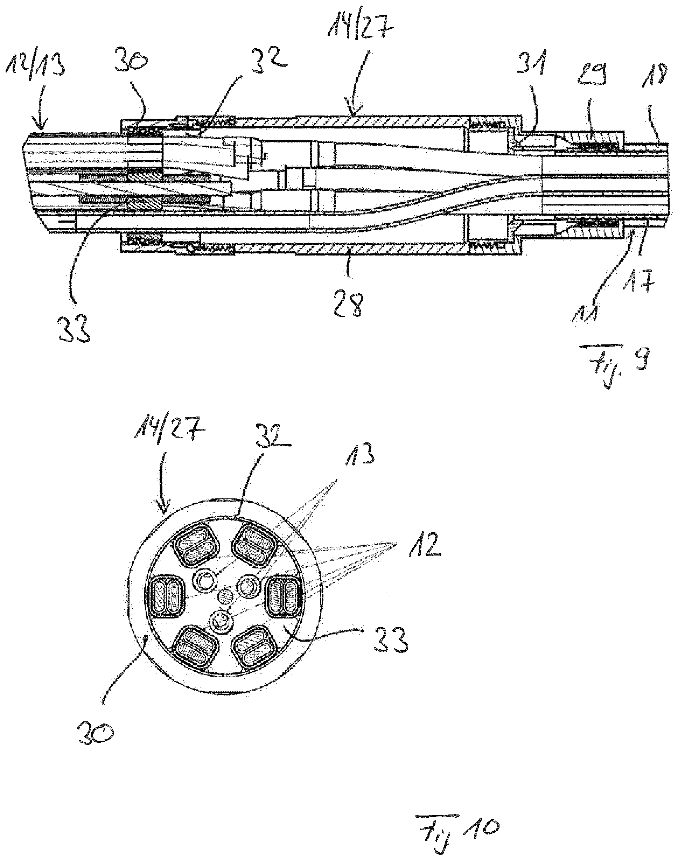

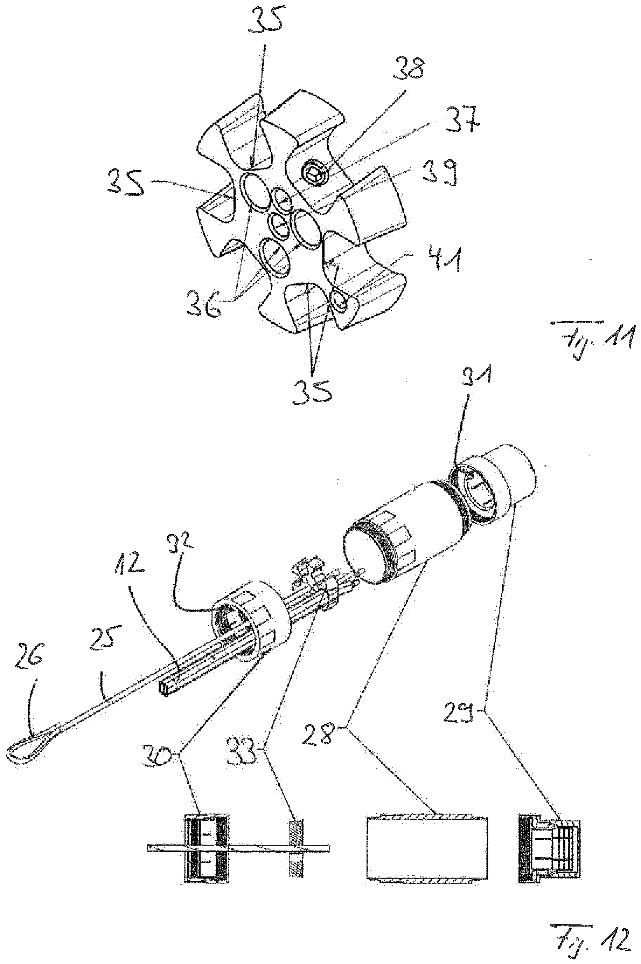

Figures 8 to 12 show different views and details of a cable assembly 10 with electrical power conductors and fiber optic data lines according to a second embodiment. In order to avoid unnecessary repetitions, for identical parts identical reference signs are used and reference is made to the above description of the embodiment of Figures 1 to 7. Only the differences between the embodiment of Figures 8 to 12 and the embodiment of Figures 1 to 7 will be described below.

In the embodiment of Figures 8 to 12, the cable assembly 10 comprises one hybrid cable 11, six electrical tether cables 12 and three fiber optic tether cables 13. The hybrid cable 11 has twelve first electrical power conductors 15 and three first fiber optic data lines 16. Each of the electrical tether cables 12 has two second electrical power conductors 19 and each of the fiber optic tether cables 13 has one second fiber optic data line 22.

Each of the fiber optic tether cables 13 comprises one fiber optic connector 24. In the embodiment of Figures 8 to 12, the disk-like basic body 34 of the separator element 33 provides six outer recesses 35 each for receiving one of the three electrical tether cables 12. The disk-like basic body 34 of the separator element 33 provides further three through holes 36 or other apertures each for receiving one fiber optic tether cable 13.

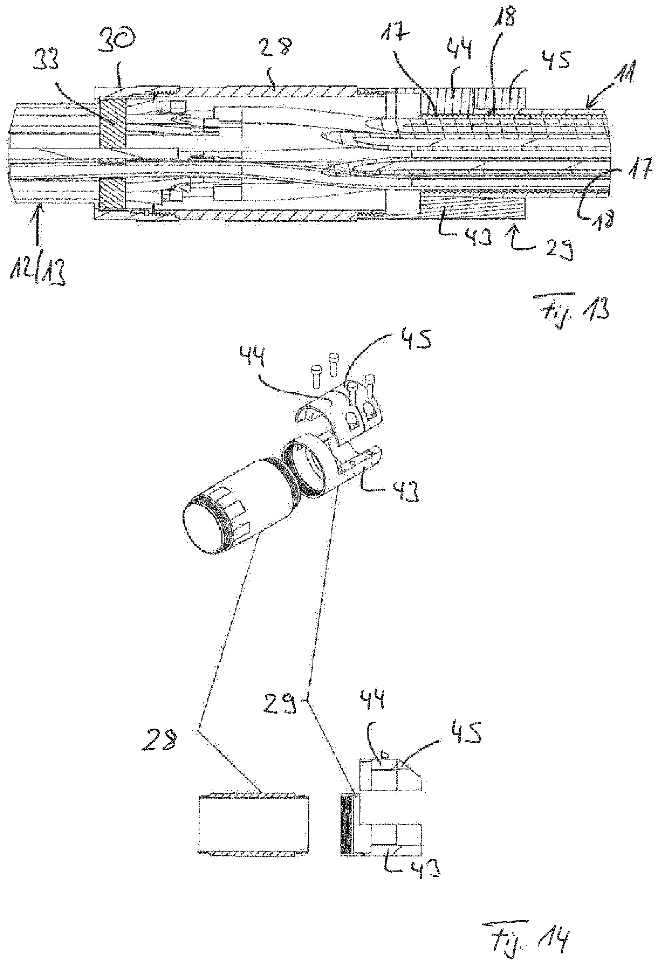

Figures 13 and 14 show different views and details of a cable assembly 10 with electrical power conductors and fiber optic data lines according to a third embodiment. In order to avoid unnecessary repetitions, for identical parts identical reference signs are used and reference is made to the above description of the embodiment of Figures 1 to 7. Only the differences between the embodiment of Figures 13 and 14 and the embodiment of Figures 1 to 7 will be described below.

In the embodiment of Figures 13 and 14, the first nut-like body 29 of the modular shielding unit 27 which is fastenable to the central body 28 of the modular shielding unit 27 comprises three separate elements.

A first element provides a basic section 43 of the first nut-like body 29 which is used to fasten the first nut-like body 29 to the central body 28.

A second element provides a compression section 44 which is fastenable to the basic section 43 to become pressed against the insulation element 17 of the hybrid cable 11 and to provide the electrical contact between the insulation element 17 of the hybrid cable 11 and the central body 28 of the modular shielding unit 27.

The modular shielding unit 27 of the embodiment of Figures 13 and 14 does not comprise the first compression element 31 of the embodiment of Figures 1 to 7. The compression section 44 provides the function of the first compression element 31.

A third element provides another compression section 45 which is fastenable to the basic section 43 to become pressed against the outer cable jacket 18 of the hybrid cable 11 and to provide additional strain relief for the hybrid cable 11.

The cable assembly 10 is preferably used in FTTA (Fiber-To-The-Antenna) applications as part of a power and communication system 49. Such a power and communication system 49 (see Figure 15) comprises an antenna 50, wherein the antenna 50 has a base station 51 and at least one transmitter station 52.

A cable assembly 10 extends from the base station 51 of the antenna 50 to the each transmitter station 52 of the antenna 50.

The cable assembly 10 comprises the electrical power conductors 16, 19 for providing electrical power from the base station 51 to the or each transmitter station 52 and the fiber optic data lines 16, 22 for transmitting data signals between the base station 51 to the or each transmitter station 52.

The cable assembly 10 has been described above in detail. Reference is made to the above description of Figures 1 to 14.

The cable assembly 10 extending between the base station 51 of the antenna 50 and the transmitter station 52 of the antenna 50 provides a 360° shielding of all electrical power conductors 15, 20 and avoids an electrical overload on the power conductors 15, 20 due to lightning effects. The shielding unit 27 protects the power conductors 15, 20 against an electromagnetic impulse and transmits a lightning current to ground.

In the region of the base station 51 the shielding element 17 of the hybrid cable 11 is connected to a EBB (Equal potential Bonding Bar) unit 53 of the base station 51. The EBB unit 53 of the base station 51 connects the shielding element 17 of the hybrid cable 11 to ground in the region of the base station 51. In addition, along the longitudinal extension of the hybrid cable 11 the shielding element 17 of the hybrid cable 11 is connected to ground 54 in regular distances. Further on, in the region of the base station 51 the electrical power conductors 16 of the hybrid cable 11 are connected to a SPD (Surge Protection Device) unit 58 and the fiber optic data lines 16 of the hybrid cable 11 are connected to a fiber optic distribution unit 59.

The SPD unit 58 of the base station 51 provides surge protection for the electrical power conductors 15 of the hybrid cable 11. The fiber optic distribution unit 59 of the base station 51 can be provided by a patch panel and/or by splice trays.

In the region of each transmitter station 52, the shielding element 20 of the respective electrical tether cable 12 is connected to a LPS (Lightning Protection System) unit (not shown) of the respective transmitter station 52 and through said LPS unit and a grounding wire 57 to a second EBB unit 55.

The grounding wire 57 extends between the second EBB unit 55 and the LPS unit at each transmitter station 52.

According to such an exemplary embodiment, the ground path the overall cable assembly has a capacity of at least 50 kA, such as at least 100 kA, or even at least 300 kA, allowing for controlled guidance of a lightning bolt.

In the region of the joining location 14 the shielding elements 20 of the electrical tether cables 12 and the shielding element 17 of the hybrid cable 11 are connected to the second EBB unit 55, namely through the grounding wire 56 extending between the second EBB unit 55 and the shielding unit 27, namely the separator element 33 of the shielding unit 27.

Such a power and communication system 49 or antenna 50 is sufficiently protected against damage by a lightning strike.

As described above, the cable assembly 10 comprising the hybrid cable 11 and the tether cables 12 and 13 has preferably a joining location 14. In such a joining location 14 the first electrical power conductors 15 of the hybrid cable 11 are connected with the second electrical power conductors 19 of the electrical tether cables 12, and the or each first fiber optic data line 16 of the hybrid cable 11 is connected with the second fiber optic data line 22 of the or each fiber optic tether cable 13.

It should be noted that it is alternatively possible that the cable assembly 10 comprises a simple furcation location in which the first electrical power conductors 15 of the hybrid cable 11 are branched off to the second electrical power conductors 19 of the electrical tether cables 12 without connections between the same, and in which the or each first fiber optic data line 16 of the hybrid cable 11 is branched off to the second fiber optic data line 22 of the or each fiber optic tether cable 13 without connection between the same.

### List of reference numerals

- 10: cable assembly
- 11: hybrid cable
- 12: electrical tether cable
- 13: fiber optic tether cable
- 14: furcation location / joining location
- 15: first electrical power conductor
- 16: first fiber optic data line
- 17: shielding element
- 18: cable jacket
- 19: second electrical power conductor
- 20: shielding element
- 21: cable jacket
- 22: second fiber optic data line
- 23: cable jacket
- 24: fiber optic connector
- 25: pulling element
- 26: pilling grip
- 27: shielding unit
- 28: central body
- 29: first nut-like body
- 30: second nut-like body
- 31: first compression element
- 32: second compression element
- 33: separator element
- 34: disk-like basic body
- 35: recess
- 36: through hole
- 37: opening
- 38: set screw
- 39: through hole
- 40: insulation material
- 41: through hole
- 42: shrinkable tube
- 43: basic section
- 44: compression section
- 45: compression section
- 46: slot
- 47: slot
- 48: guiding element
- 49: power and communication system
- 50: antenna
- 51: base station
- 52: transmitter station
- 53: EBB unit
- 54: ground
- 55: EBB unit
- 56: grounding wire
- 57: grounding wire
- 58: SPD unit
- 59: fiber optic distribution unit

## Claims

1. A cable assembly (10) with electrical power conductors and fiber optic data lines, the cable assembly (10) comprising:
a hybrid cable (11) having first electrical power conductors (15) and at least one first fiber optic data line (16), wherein the first electrical power conductors (15) and the or each first fiber optic data line (16) are surrounded by a shielding element (17) of the hybrid cable (11),
a plurality of electrical tether cables (12) having second electrical power conductors (19) and at least one fiber optic tether cable (13) having at least one second fiber optic data line (22), wherein the second electrical power conductors (19) of each electrical tether cable (12) are surrounded by a shielding element (20) of the respective electrical tether cable (12),
a furcation or joining location (14), wherein the first electrical power conductors (15) of the hybrid cable (11) are branched off to or connected with the second electrical power conductors (19) of the electrical tether cables (12) at the furcation or joining location (14), and wherein the or each first fiber optic data line (16) of the hybrid cable (11) is branched off to or connected with the second fiber optic data line (22) of the or each fiber optic tether cable (13) at the furcation or joining location (14); wherein an electrical contact is established between the shielding element (17) of the hybrid cable (11) and the shielding elements (20) of the respective electrical tether cables (12),
**characterized in that**
the furcation or joining location (14) comprises a shielding unit (27) establishing the electrical contact between the shielding element (17) of the hybrid cable (11) and the shielding elements (20) of the respective electrical tether cables (12),
the shielding unit (27) comprises a central body (28) made from an electrical conductive material surrounding the hybrid cable (11) and the tether cables (12, 13) in the region of the furcation or joining location (14), wherein the central body (28) is in electrical contact with the shielding element (17) of the hybrid cable (11) and with the shielding element (20) of each electrical tether cable (12),
the shielding unit (27) further comprises a first nut-like body (29) made from an electrical conductive material being fastenable to a first end of the central body (28) in the region of the hybrid cable (11) providing an electrical contact with the shielding element (17) of the hybrid cable (11); a second nut-like body (30) made from an electrical conductive material being fastenable to a second end of the central body (18) in the region of the tether cables (12, 13) providing an electrical contact with the shielding element (20) of each electrical tether cable (12);
the shielding unit (27) further comprises a first compression element (31) made from an electrical conductive material being positioned between first nut-like body (29) and the hybrid cable (11), wherein the first compression element (31) becomes compressed when the first nut-like body (29) becomes fastened to the central body (28) such that the compressed first compression element (31) provides an electrical conductive path between the shielding element (17) of the hybrid cable (22) and the central body (28),
the shielding unit (27) further comprises a second compression element (32) made from an electrical conductive material being positioned between second nut-like body (30) and the tether cables (12, 13), wherein the second compression element (32) becomes compressed when the second nut-like body (30) becomes fastened to the central body (28) such that the compressed second compression element (32) provides an electrical conductive path between the shielding elements (20) of the electrical tether cables (12) and the central body (28),
the shielding unit (27) further comprises a separator element (33) made from an electrical conductive material, wherein the separator element (33) comprises recesses (35) for receiving the electrical tether cables (12), and wherein the electrical tether cables (12) become pressed into the recesses (35) of the separator element (33) when second compression element (32) becomes compressed thereby providing an electrical conductive path between the shielding elements (20) of the electrical tether cables (12) and the central body (28) and between the shielding elements (20) of the electrical tether cables (12) and the separator element (33),
the furcation or joining location (14) is over-molded.

2. The cable assembly of claim 1, **characterized in that** the first compression element (31) is a separate element.

3. The cable assembly of one of claims 1 or 2, **characterized in that** the second compression element (32) is an integral element of the central body (28).

4. The cable assembly of one of claims 1 to 3, **characterized in that** the separator element (33) comprises at least one through hole (36) for receiving at least one fiber optic tether cable (13).

5. The cable assembly of one of claims 1 to 4, **characterized in that** the separator element (33) comprises an opening (37) for receiving and contacting a grounding wire.

6. The cable assembly of one of claims 1 to 5, **characterized in that** the separator element (33) comprises a through hole (39) for receiving a pulling element (25).

7. The cable assembly of one of claims 1 to 6, **characterized in that** the shielding unit (27) is filled with an insulation material (40).

8. The cable assembly of one of claims 1 to 7, **characterized in that** first nut-like body (29) of the shielding unit (27) comprises a section (45) which becomes pressed against a cable jacket (18) of the hybrid cable (11).

9. A power and communication system (49), having:
an antenna (50), whereby the antenna (50) comprises a base station (51), at least one transmitter station (52) and a cable assembly (10) extending from the base station (51) to the or each transmitter station (52); **characterized in that**
the cable assembly (10) is provided by a cable assembly of one of claims 1 to 8, wherein the hybrid cable (11) is connected to base station (51) of the antenna, and wherein the tether cables (12, 13) are connected to the or each transmitter station (52) of the antenna.

## Patentansprüche

1. Kabelanordnung (10) mit elektrischen Leitern und faseroptischen Datenleitungen, wobei die Kabelanordnung (10) Folgendes aufweist:
ein Hybridkabel (11) mit ersten elektrischen Leitern (15) und zumindest einer ersten faseroptischen Datenleitung (16), wobei die ersten elektrischen Leiter (15) und die oder jede erste faseroptische Datenleitung (16) von einem Abschirmelement (17) des Hybridkabels (11) umgeben sind,
mehrere elektrische Haltekabel (12) mit zweiten elektrischen Leitern (19) und zumindest ein faseroptisches Haltekabel (13) mit zumindest einer zweiten faseroptischen Datenleitung (22), wobei die zweiten elektrischen Leiter (19) jedes elektrischen Haltekabels (12) von einem Abschirmelement (20) des entsprechenden elektrischen Haltekabels (12) umgeben sind,
eine Aufteil- oder Verbindungsstelle (14), wobei die ersten elektrischen Leiter (15) des Hybridkabels (11) an der Aufteil- oder Verbindungsstelle (14) zu den zweiten elektrischen Leitern (19) der elektrischen Haltekabel (12) verzweigt oder mit diesen verbunden sind, und wobei die oder jede erste faseroptische Datenleitung (16) des Hybridkabels (11) an der Aufteil- oder Verbindungsstelle (14) zu den zweiten faseroptischen Datenleitung (22) des oder jedes faseroptischen Haltekabels (13) verzweigt oder mit diesen verbunden sind; wobei ein elektrischer Kontakt zwischen dem Abschirmelement (17) des Hybridkabels (11) und den Abschirmelementen (20) der entsprechenden elektrischen Haltekabel (12) hergestellt ist,
**dadurch gekennzeichnet, dass**
die Aufteil- oder Verbindungsstelle (14) eine Abschirmeinheit (27) aufweist, die den elektrischen Kontakt zwischen dem Abschirmelement (17) des Hybridkabels (11) und den Abschirmelementen (20) der entsprechenden elektrischen Haltekabel (12) herstellt,
die Abschirmeinheit (27) einen mittleren Körper (28) aufweist, gebildet aus einem elektrisch leitfähigen Material, der im Bereich der Aufteil- oder Verbindungsstelle (14) das Hybridkabel (11) und die Haltekabel (12, 13) umgibt, wobei der mittlere Körper (28) in elektrischem Kontakt mit dem Abschirmelement (17) des Hybridkabels (11) und mit dem Abschirmelement (20) jedes elektrischen Haltekabels (12) ist,
die Abschirmeinheit (27) ferner aufweist einen ersten mutterartigen Körper (29), gebildet aus einem elektrisch leitfähigen Material, der an einem ersten Ende des mittleren Körpers (28) im Bereich des Hybridkabels (11) befestigbar ist, einen elektrischen Kontakt mit dem Abschirmelement (17) des Hybridkabels (11) bereitstellend; einen zweiten mutterartigen Körper (30), gebildet aus einem elektrisch leitfähigen Material, der an einem zweiten Ende des mittleren Körpers (18) im Bereich der Haltekabel (12, 13) befestigbar ist, einen elektrischen Kontakt mit dem Abschirmelement (20) jedes elektrischen Haltekabels (12) bereitstellend;
die Abschirmeinheit (27) ferner ein erstes Kompressionselement (31) aufweist, gebildet aus einem elektrisch leitfähigen Material, das zwischen dem ersten mutterartigen Körper (29) und dem Hybridkabel (11) positioniert ist, wobei das erste Kompressionselement (31) zusammengedrückt wird, wenn der erste mutterartige Körper (29) am mittleren Körper (28) befestigt wird, sodass das zusammengedrückte erste Kompressionselement (31) einen elektrisch leitfähigen Pfad zwischen dem Abschirmelement (17) des Hybridkabels (22) und dem mittleren Körper (28) bereitstellt,
die Abschirmeinheit (27) ferner ein zweites Kompressionselement (32) aufweist, gebildet aus einem elektrisch leitfähigen Material, das zwischen dem zweiten mutterartigen Körper (30) und den Haltekabeln (12, 13) positioniert ist, wobei das zweite Kompressionselement (32) zusammengedrückt wird, wenn der zweite mutterartige Körper (30) am mittleren Körper (28) befestigt wird, sodass das zusammengedrückte zweite Kompressionselement (32) einen elektrisch leitfähigen Pfad zwischen den Abschirmelementen (20) der elektrischen Haltekabel (12) und dem mittleren Körper (28) bereitstellt,
die Abschirmeinheit (27) ferner ein Separatorelement (33), gebildet aus einem elektrisch leitfähigen Material, aufweist, wobei das Separatorelement (33) Vertiefungen (35) zum Aufnehmen der elektrischen Haltekabel (12) aufweist, und wobei die elektrischen Haltekabel (12) in die Vertiefungen (35) des Separatorelements (33) gedrückt werden, wenn das zweite Kompressionselement (32) zusammengedrückt wird, dabei einen elektrisch leitfähigen Pfad zwischen den Abschirmelementen (20) der elektrischen Haltekabel (12) und dem mittleren Körper (28) und zwischen den Abschirmelementen (20) der elektrischen Haltekabel (12) und dem Separatorelement (33) bereitstellend,
die Aufteil- oder Verbindungsstelle (14) überformt ist.

2. Kabelanordnung nach Anspruch 1,
**dadurch gekennzeichnet, dass** das erste Kompressionselement (31) ein separates Element ist.

3. Kabelanordnung nach einem der Ansprüche 1 oder 2,
**dadurch gekennzeichnet, dass** das zweite Kompressionselement (32) ein integrales Element des mittleren Körpers (28) ist.

4. Kabelanordnung nach einem der Ansprüche 1 bis 3,
**dadurch gekennzeichnet, dass** das Separatorelement (33) zumindest ein Durchgangsloch (36) zum Aufnehmen von zumindest einem faseroptischen Haltekabel (13) aufweist.

5. Kabelanordnung nach einem der Ansprüche 1 bis 4, **dadurch gekennzeichnet, dass** das Separatorelement (33) eine Öffnung (37) zum Aufnehmen und Kontaktieren eines Erdungsdrahtes aufweist.

6. Kabelanordnung nach einem der Ansprüche 1 bis 5, **dadurch gekennzeichnet, dass** das Separatorelement (33) ein Durchgangsloch (39) zum Aufnehmen eines Zugelements (25) aufweist.

7. Kabelanordnung nach einem der Ansprüche 1 bis 6, **dadurch gekennzeichnet, dass** die Abschirmeinheit (27) mit einem Isoliermaterial (40) gefüllt ist.

8. Kabelanordnung nach einem der Ansprüche 1 bis 7, **dadurch gekennzeichnet, dass** der erste mutterartige Körper (29) der Abschirmeinheit (27) einen Abschnitt (45) umfasst, der gegen einen Kabelmantel (18) des Hybridkabels (11) gepresst wird.

9. Stromleit- und Kommunikationssystem (49) mit:
einer Antenne (50), wobei die Antenne (50) eine Basisstation (51), zumindest eine Senderstation (52) und eine Kabelanordnung (10), die sich von der Basisstation (51) zu der oder jeder Senderstation (52) erstreckt, aufweist;
**dadurch gekennzeichnet, dass**
die Kabelanordnung (10) durch eine Kabelanordnung nach einem der Ansprüche 1 bis 8 bereitgestellt wird,
wobei das Hybridkabel (11) mit der Basisstation (51) der Antenne verbunden ist und wobei die Haltekabel (12, 13) mit der oder jeder Senderstation (52) der Antenne verbunden sind.

## Revendications

1. Ensemble de câbles (10) comptant des conducteurs de puissance électrique et des lignes de données par fibre optique, l'ensemble de câbles (10) comprenant :
un câble hybride (11) comptant des premiers conducteurs de puissance électrique (15) et au moins une première ligne de données par fibre optique (16), les premiers conducteurs de puissance électrique (15) et la ou chaque première ligne de données par fibre optique (16) étant entourés par un élément de blindage (17) du câble hybride (11),
une pluralité de câbles électriques de liaison (12) comptant des seconds conducteurs de puissance électrique (19) et au moins un câble de liaison à fibre optique (13) comptant au moins une deuxième ligne de données par fibre optique (22), les seconds conducteurs de puissance électrique (19) de chaque câble électrique de liaison (12) étant entourés par un élément de blindage (20) du câble électrique de liaison (12) respectif,
un site de séparation ou de jonction (14), les premiers conducteurs de puissance électrique (15) du câble hybride (11) étant séparés ou connectés aux seconds conducteurs de puissance électrique (19) des câbles électriques de liaison (12) au niveau du site de séparation ou de jonction (14), et la ou chaque première ligne de données par fibre optique (16) du câble hybride (11) étant séparée ou connectée à la deuxième ligne de données par fibre optique (22) du ou de chaque câble de liaison à fibre optique (13) au niveau du site de séparation ou de jonction (14) ; dans lequel un contact électrique est établi entre l'élément de blindage (17) du câble hybride (11) et les éléments de blindage (20) des câbles électriques de liaison (12) respectifs,
**caractérisé en ce que**
le site de séparation ou de jonction (14) comprend une unité de blindage (27) établissant le contact électrique entre l'élément de blindage (17) du câble hybride (11) et les éléments de blindage (20) des câbles électriques de liaison (12) respectifs,
l'unité de blindage (27) comprend un corps central (28) réalisé en un matériau électriquement conducteur entourant le câble hybride (11) et les câbles de liaison (12, 13) dans la région du site de séparation ou de jonction (14), le corps central (28) étant en contact électrique avec l'élément de blindage (17) du câble hybride (11) et avec l'élément de blindage (20) de chaque câble électrique de liaison (12),
l'unité de blindage (27) comprend en outre un premier corps en forme d'écrou (29) réalisé dans un matériau électriquement conducteur pouvant être fixé à une première extrémité du corps central (28) dans la région du câble hybride (11) assurant un contact électrique avec l'élément de blindage (17) du câble hybride (11) ; un second corps en forme d'écrou (30) réalisé dans un matériau électriquement conducteur pouvant être fixé à une seconde extrémité du corps central (18) dans la région des câbles de liaison (12, 13) assurant un contact électrique avec l'élément de blindage (20) de chaque câble électrique de liaison (12) ;
l'unité de blindage (27) comprend en outre un premier élément de compression (31) réalisé dans un matériau électriquement conducteur positionné entre le premier corps en forme d'écrou (29) et le câble hybride (11), le premier élément de compression (31) étant comprimé quand le premier corps en forme d'écrou (29) est fixé au corps central (28) de telle sorte que le premier élément de compression comprimé (31) fournisse un trajet électriquement conducteur entre l'élément de blindage (17) du câble hybride (22) et le corps central (28),
l'unité de blindage (27) comprend en outre un second élément de compression (32) réalisé dans un matériau électriquement conducteur positionné entre le second corps en forme d'écrou (30) et les câbles de liaison (12, 13), le second élément de compression (32) étant comprimé quand le second corps en forme d'écrou (30) est fixé au corps central (28) de telle sorte que le second élément de compression comprimé (32) fournisse un trajet électriquement conducteur entre les éléments de blindage (20) des câbles électriques de liaison (12) et le corps central (28),
l'unité de blindage (27) comprend en outre un élément de séparation (33) réalisé dans un matériau électriquement conducteur, l'élément de séparation (33) comprenant des renfoncements (35) destinés à recevoir les câbles électriques de liaison (12), et dans lequel les câbles électriques de liaison (12) sont pressés à l'intérieur des renfoncements (35) de l'élément de séparation (33) quand le second élément de compression (32) est comprimé fournissant ainsi un trajet électriquement conducteur entre les éléments de blindage (20) des câbles électriques de liaison (12) et le corps central (28) et entre les éléments de blindage (20) des câbles électriques de liaison (12) et l'élément de séparation (33),
le site de séparation ou de jonction (14) est surmoulé.

2. Ensemble de câbles selon la revendication 1,
**caractérisé en ce que** le premier élément de compression (31) est un élément séparé .

3. Ensemble de câbles selon l'une des revendications 1 ou 2,
**caractérisé en ce que** le second élément de compression (32) est un élément intégré au corps central (28) .

4. Ensemble de câbles selon l'une des revendications 1 à 3,
**caractérisé en ce que** l'élément de séparation (33) comprend au moins un trou d'interconnexion (36) destiné à recevoir au moins un câble de liaison à fibre optique (13) .

5. Ensemble de câbles selon l'une des revendications 1 à 4
**caractérisé en ce que** l'élément de séparation (33) comprend une ouverture (37) destinée à recevoir et à faire contact avec un fil de mise à la terre.

6. Ensemble de câbles selon l'une des revendications 1 à 5,
**caractérisé en ce que** l'élément de séparation (33) comprend un trou d'interconnexion destiné à recevoir un élément de traction (25).

7. Ensemble de câbles selon l'une des revendications 1 à 6,
**caractérisé en ce que** l'unité de blindage (27) est remplie d'un matériau isolant (40).

8. Ensemble de câbles selon l'une des revendications 1 à 7,
**caractérisé en ce que** le premier corps en forme d'écrou (29) de l'unité de blindage (27) comprend une section (45) qui est comprimée contre une chemise de câble (18) du câble hybride (11).

9. Système de puissance et de communication (49), comptant :
une antenne (50), l'antenne (50) comprenant une station de base (51), au moins une station émettrice (52) et un ensemble de câbles (10) s'étendant depuis la station de base (51) jusqu'à la ou chaque station émettrice (52) ;
**caractérisé en ce que**
l'ensemble de câbles (10) est fourni par un ensemble de câbles selon l'une des revendications 1 à 8,
dans lequel le câble hybride (11) est connecté à la station de base (51) de l'antenne, et dans lequel les câbles de liaison (12, 13) sont connectés à la ou chaque station émettrice (52) de l'antenne.
